# FASCICULE DE BREVET EUROPEEN

(11) **EP 1 002 637 B1**
(45) Date de publication et mention de la délivrance du brevet: **23.04.2003**
(21) Numéro de dépôt: 99122738.0
(22) Date de dépôt: 16.11.1999
(51) Int. Cl.: B29D 30/06

(54) **Moule de vulcanisation d'enveloppes de pneumatiques**
Reifenvulkanisationsform
Tyre vulcanization mould

(30) Priorité: 18.11.1998 FR 1452098
(43) Date de publication de la demande: 24.05.2000
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Menard, Gilbert, 63530 Volvic (FR)
(74) Mandataire: Cohen, Sylvia

(56) Documents cités:
- FR-A- 1 587 458
- US-A- 4 575 438
- PATENT ABSTRACTS OF JAPAN vol. 006, no. 138 (M-145), 27 juillet 1982 (1982-07-27) & JP 57 059743 A (YOKOHAMA RUBBER CO LTD:THE), 10 avril 1982 (1982-04-10)

## Description

L'invention concerne un moule de vulcanisation d'enveloppes de pneumatique par action directe d'un fluide sur les parois intérieures d'une enveloppe de pneumatique comportant notamment deux bourrelets.

Dans les techniques généralement utilisées de vulcanisation d'enveloppes crues de pneumatiques, ladite ébauche est conformée et plaquée contre un moule de vulcanisation au moyen d'une vessie en caoutchouc gonflable et chauffable, vessie qui peut être épaisse et communément appelée bag de vulcanisation, ou mince et alors appelée membrane de vulcanisation.

Les inconvénients liés à ces techniques sont dus, d'une part au dispositif ou presse nécessaire aux opérations de mise en place et de retrait de la vessie et, d'autre part à la nature de la vessie de gonflage elle-même. En effet, la vessie est sensible à de multiples détériorations et doit être remplacée après un certain nombre de cuissons effectuées, opération de remplacement d'une part coûteuse et génératrice d'autre part de temps d'arrêt de la presse de vulcanisation qui se répercutent sur le prix de revient du pneumatique, d'autant plus que la vessie de caoutchouc est un écran thermique et ne permet pas une vulcanisation aussi rapide que l'on souhaiterait. En outre, d'éventuelles hétérogénéités de la vessie se retrouvent, la vulcanisation terminée, dans le pneumatique terminé et affectent directement la production. Lors du processus de conformation par exemple, les endroits les plus faibles en épaisseur de la vessie gonflable s'étirent plus fortement que les autres et provoquent des défauts sur l'enveloppe de pneumatique qui se traduisent par une dilatation excessive de l'enveloppe montée sur une jante, aux endroits correspondant sur ladite jante. On peut mentionner encore que la vessie gonflable comporte à sa surface extérieure une série de rainures destinées à l'évacuation de l'air emprisonné entre l'enveloppe de pneumatique et la vessie. Lors du processus de vulcanisation, lesdites rainures peuvent provoquer des déformations des couches intérieures de l'armature de carcasse. De plus, et plus particulièrement dans le cas de l'utilisation d'une membrane, de nombreux plis existent sur ladite membrane, et le manque d'uniformité ainsi créé se répercute sur le pneumatique lui-même.

Pour parer aux inconvénients ci-dessus, on a été conduit, en renonçant à l'utilisation d'une vessie de gonflage et de vulcanisation, à faire agir le fluide de vulcanisation directement sur les parois intérieures de l'enveloppe de pneumatique. Cependant afin de répondre aux exigences de positionnement correct des bourrelets et d'étanchéité du moule, on doit venir presser suivant la direction axiale et au moyen de plaques circonférentielles de serrage les bourrelets de l'enveloppe contre les surfaces correspondantes du moule de vulcanisation, tel que décrit à titre d'exemple dans la publication FR 1 345 102.

Dans ces dispositifs connus de vulcanisation sans vessie de gonflage, l'utilisation de plaques ou anneaux de serrage engendrent premièrement des inconvénients d'ordre mécanique, la mise en place de telles plaques après fermeture de la presse demandant une haute technicité mécanique, et deuxièmement des inconvénients d'ordre thermique, la partie du bourrelet comprimée axialement étant soustraite à l'action du fluide de chauffage, ce qui provoque de manière évidente une variation de température de vulcanisation dans le bourrelet même et crée donc une différence notable de vulcanisation, d'où une hétérogénéité de qualité de mélanges et pour conséquence une endurance des bourrelets fortement diminuée.

La publication Fr-A-1587458 correspond au préambule de la revendication 1 de la présente invention.

L'invention vise à pallier l'ensemble de ces inconvénients.

Le moule de vulcanisation d'une enveloppe de pneumatique comportant deux bourrelets, pour la vulcanisation par action directe d'un fluide sur les parois intérieures de ladite enveloppe, comprend deux couronnes de moulage respectivement de la surface extérieure de chacun des bourrelets, dans lequel chaque couronne de moulage comprend successivement axialement à partir du centre du moule vers l'extérieur de ce dernier, un premier tronçon annulaire présentant une surface extérieure de support, pour supporter le bourrelet correspondant lors de la conformation de l'enveloppe de pneumatique crue, et un deuxième tronçon annulaire, axialement adjacent à ladite surface de support et axialement plus à l'extérieur par rapport à celle-ci, assurant le moulage dudit bourrelet et assurant l'étanchéité du moule.

La présence de ces deux tronçons annulaires distincts réalisant l'un l'opération de conformation et l'autre l'opération de moulage permet d'éviter de recourir à l'utilisation de plaques ou d'anneaux de serrage en contact avec la surface intérieure des bourrelets, en assurant néanmoins un bon positionnement des bourrelets et donc de l'enveloppe de pneumatique dans le moule et en garantissant l'étanchéité de ce dernier.

Le deuxième tronçon comporte successivement axialement à partir du centre du moule vers l'extérieur de ce dernier, une portée circonférentielle au contact du premier tronçon, une rainure circonférentielle et une portion sensiblement tronconique, la portée présentant une surface sensiblement cylindrique dont le diamètre est supérieur aux diamètres intérieurs minimaux de l'enveloppe de pneumatique crue et cuite. On désigne par le diamètre minimal intérieur de l'enveloppe de pneumatique, le diamètre minimal défini par un bourrelet de ladite enveloppe.

La présence de cette portée permet d'une part d'assurer, lors de la conformation de l'enveloppe de pneumatique, que les bourrelets sont en appui sur les premiers tronçons des couronnes de moulage, et d'autre part d'assurer, en coopération avec la rainure, le maintien de l'étanchéité du moule. De préférence, on ne dispose aucun évent, contrairement à ce qui se fait souvent, sur toute la surface radialement extérieure desdites couronnes. La surface des couronnes du moule est totalement étanche à l'air.

D'autres caractéristiques et avantages de l'invention apparaîtront à la lecture d'un exemple de réalisation d'un moule de vulcanisation conforme à l'invention, en référence au dessin annexé dans lequel:
- la figure 1 est une vue en coupe radiale du moule de vulcanisation conforme à l'invention, en position fermée de ce dernier,
- la figure 2 est un agrandissement de la figure 1 représentant partiellement une des couronnes du moule,
- les figures 3A à 3C sont des représentations schématiques en coupe radiale des étapes de fonctionnement du moule représenté à la figure 1.

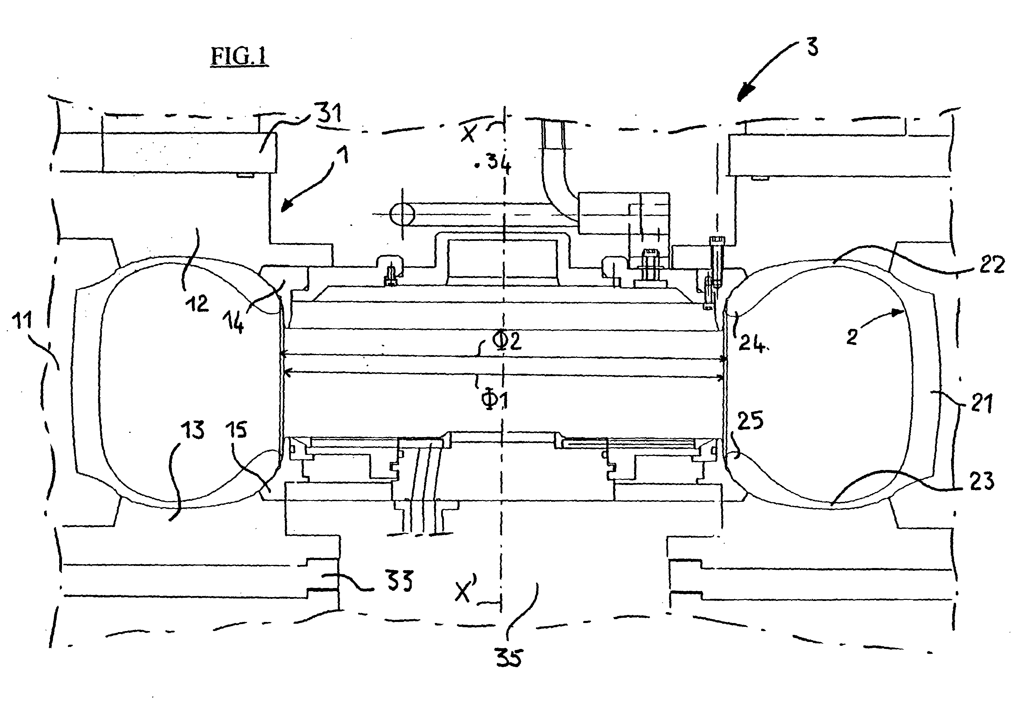

Le moule 1 de vulcanisation, selon la figure 1, agit directement par l'intermédiaire d'un fluide sur les parois intérieures d'une enveloppe de pneumatique 2 crue à vulcaniser. L'enveloppe 2 comprend notamment une bande de roulement 21, deux flancs 22, 23 et deux bourrelets 24, 25. On désignera respectivement Φ1 et Φ2 les diamètres minimaux de l'enveloppe de pneumatique 2 crue et cuite.

Le moule 1 comprend des éléments de moulage 11 de la surface extérieure de la bande de roulement, deux coquilles 12, 13 de moulage respectivement de la surface extérieure de chacun des flancs 22, 23 et deux couronnes 14, 15 de moulage respectivement de la surface extérieure de chacun des bourrelets 24, 25, chaque couronne 14, 15 étant montée solidaire d'une des coquilles 12, 13.

Dans certaines réalisations, les couronnes peuvent être réalisées en une seule pièce avec les coquilles correspondantes, il est indifférent que la couronne soit intégrée à la coquille ou séparée de celle-ci, cependant ici on préférera pour des facilités de fabrication des couronnes que les pièces soient séparées.

Le moulage et le démoulage d'un pneumatique supposent des mouvements relatifs dans le sens axial, c'est-à-dire défini par l'axe XX' du moule 1, entre le pneumatique 2 et chacune des coquilles et couronnes qui en assurent le moulage, on peut utiliser comme éléments de moulage de la surface extérieure de la bande de roulement 21, des secteurs mobiles par rapport aux coquilles 12, 13 et aux couronnes 14, 15 pour mouler la surface extérieure de la bande de roulement.

La figure 1 fait également apparaître une presse 3 qui porte le moule 1. La presse 3 comporte un bâti inférieur 33 sur lequel est fixé la coquille 13, et un bâti mobile encore appelé bâti supérieur 31 sur lequel est fixé la coquille 11. On désigne ici certaines pièces de la presse par les adjectifs « inférieur » et « supérieur » pour reprendre la terminologie usuelle car les presses sont en général construites pour recevoir un moule positionné à axe vertical. Bien évidemment, le caractère inférieur ou supérieur des éléments de la presse n'est pas limitatif et les termes ne sont utilisés qu'aux fins de ne pas perturber le lecteur avec une terminologie qui ne serait pas usuelle.

Il existe, en outre, un plateau inférieur 35 et un plateau supérieur 34. Les mouvements conférés au plateau inférieur 35 et au plateau supérieur 34 sont bien connus et permettent ou facilitent le chargement d'une enveloppe de pneumatique crue à vulcaniser et son déchargement après vulcanisation.

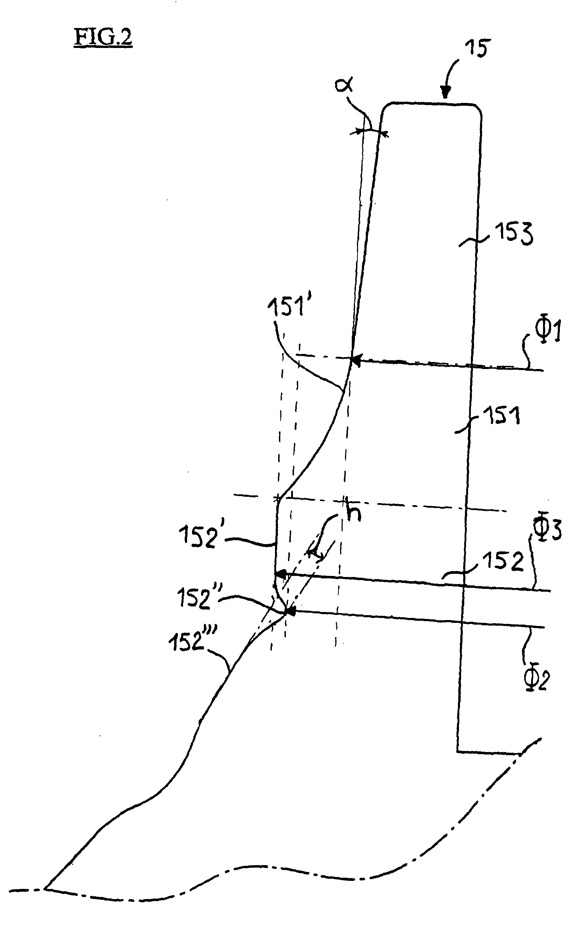

On décrira dans ce qui suit en référence à la figure 2, une seule des couronnes, 15, de moulage, les deux couronnes 14 et 15 étant identiques. Sur cette figure, apparaissent les extrémités des flèches indiquant les divers diamètres pris en compte dans la description.

La couronne 15 comprend axialement successivement à partir du centre du moule 1 vers l'extérieur de ce dernier, un premier tronçon annulaire 151 présentant une surface extérieure 151' de support du bourrelet correspondant lors de la conformation de l'enveloppe de pneumatique crue, et un deuxième tronçon annulaire 152 définissant le moulage dudit bourrelet et assurant l'étanchéité du moule 1.

Les tronçons 151 et 152 de la couronne 15 possèdent les caractéristiques suivantes :
- la surface extérieure 151' du tronçon 151 est concave et possède un rayon de courbure correspondant sensiblement au rayon de courbure du bourrelet de l'enveloppe de pneumatique crue. Cette disposition permet une mise en place aisée du bourrelet 25 sur la surface 151', ce dernier venant épouser la forme de ladite surface,
- le tronçon 152 comprend successivement axialement à partir du centre du moule 1 vers l'extérieur de ce dernier, une portée circonférentielle 152' au contact du premier tronçon 151, une rainure circonférentielle 152" et une portion sensiblement tronconique 152''' qui se prolonge par la coquille 13 et dont la forme correspond à une zone de moulage plus « classique », c'est-à-dire dont la forme n'est pas spécifique au fait d'avoir un moule de cuisson sans membrane.

La portée 152' présente une surface sensiblement cylindrique de diamètre Φ3 supérieur au diamètre intérieur minimal Φ1 de l'enveloppe de pneumatique crue (et à celui de l'enveloppe cuite, Φ2) de sorte que la conformation de l'enveloppe de pneumatique s'effectue en prenant appui sur le tronçon 151 et non sur le tronçon 152. C'est la force de pression exercée par la suite sur les parois intérieures de l'enveloppe de pneumatique qui permet la mise en place des bourrelets sur les deuxièmes tronçons 152 des couronnes. La rainure 152", dont le diamètre impose le diamètre minimal Φ2 de l'enveloppe de pneumatique cuite, a une hauteur h comprise entre 0,5 mm et 4 mm et une longueur compatible avec les critères requis pour assurer l'étanchéité et l'accrochage de l'enveloppe de pneumatique sur une jante comme le précise la demande de brevet français N°98/09674 déposée au nom de la demanderesse. La rainure correspond ainsi à un compromis, notamment sur sa taille, permettant d'assurer l'étanchéité du moule sans nuire par la suite à l'extraction de l'enveloppe de pneumatique cuite.

En effet, dans ledit moule de vulcanisation le fluide étant directement en contact avec les parois intérieures de l'enveloppe de pneumatique, il faut être en mesure d'éviter que ce fluide ne passe entre l'enveloppe et les éléments de moulage du moule.

De plus, lors de la cuisson d'un pneumatique dans un moule avec vessie où la gomme flue à l'extrémité des bourrelets constituant une pointe entre les éléments de moulage et la vessie ce qui rend le diamètre intérieur minimal de l'enveloppe cuite inférieur à celui de l'enveloppe crue, alors que dans un moule sans vessie, les produits caoutchouteux se resserrent autour de la tringle dans chaque bourrelet et le diamètre intérieur minimal de l'enveloppe de pneumatique cuite est supérieur à celui de l'enveloppe crue.

Il faut donc tenir compte également de ces phénomènes pour réussir à assurer une bonne étanchéité. La présence de la rainure 152" permet d'assurer l'étanchéité qui est garantit par la portée 152' dont le diamètre est inférieur à celui du diamètre minimal de l'enveloppe de pneumatique cuite. De plus, la présence de la portée permet de renforcer les soudures du bourrelet en chassant ainsi l'air compris entre les zones soudées.

Notons que l'enveloppe de pneumatique obtenue avec ce moule présente des bourrelets arrondies avec une lèvre qui servira également pour assurer plus tard l'étanchéité de l'enveloppe de pneumatique lors de son montage sur une jante.

La couronne 15 comprend également un troisième tronçon 153 tronconique de précentrage de l'enveloppe de pneumatique dans le moule, situé dans le prolongement axial du premier tronçon 151 vers le centre du moule 1. Ce tronçon 153 possède une génératrice formant un angle α d'environ 5° avec l'axe du moule, ce qui permet d'assurer une bonne mise en place des bourrelets et donc un bon centrage de l'enveloppe de pneumatique crue, lors du chargement de cette dernière.

On décrira succinctement dans ce qui suit, le procédé de vulcanisation d'une enveloppe de pneumatique dans un moule de vulcanisation conforme à l'invention, en référence aux figures 3A à 3C.

Ledit procédé de vulcanisation d'une enveloppe de pneumatique (2) comprenant deux bourrelets (24, 25), à l'aide d'un moule de vulcanisation par action directe d'un fluide sur les parois intérieures de ladite enveloppe, ledit moule comprenant deux couronnes (14, 15) ayant chacune une surface de réception du bourrelet orientée radialement vers l'extérieur du moule, dont une partie au moins est utilisée pour le moulage de la surface extérieure d'un des bourrelets (24, 25), la largeur axiale de ladite surface de réception étant supérieure à la largeur axiale du bourrelet à l'état vulcanisé, comprend les étapes suivantes :
- positionner au moins un des bourrelets (24, 25) de l'enveloppe de pneumatique (2) sur une des surfaces de réception, et rapprocher axialement l'une de l'autre les couronnes jusqu'au contact de chaque surface de réception avec chaque bourrelet, puis conformer l'enveloppe de pneumatique (2) et poursuivre le rapprochement jusqu'à la cote finale de moulage de l'enveloppe de pneumatique,
- vulcaniser l'enveloppe de pneumatique en amenant au contact direct de sa paroi intérieure ledit fluide de vulcanisation.

Le mouvement de rapprochement ainsi proposé permet une utilisation du moule dans laquelle, lors de la prise en charge de l'enveloppe de pneumatique dans la presse, les couronnes ne dépassent pas la position de moulage. Grâce aux couronnes, il n'est pas utile d'aller jusqu'au contact des couronnes l'une contre l'autre pour assurer l'étanchéité permettant la conformation de l'enveloppe de pneumatique. Il n'y a pas de contrainte axiale excessive sur l'enveloppe de pneumatique cru car il n'y a pas de dépassement de la cote de vulcanisation.

L'enveloppe de pneumatique 2 est amenée grâce à une potence non représentée au dessus du moule 1 ouvert et descendue selon l'axe XX' dans ledit moule, le bourrelet inférieur 25 étant centré sur le tronçon 153 de précentrage de la couronne inférieure 15, jusqu'au contact dudit bourrelet avec la surface 151' du tronçon de support 151.

On retire alors la potence, et on descend axialement le plateau supérieur 34 de la presse 3, le tronçon 143 de précentrage de la couronne supérieure 14 assurant la mise en place correcte du bourrelet supérieur 24 qui vient prendre appui que le tronçon de support 141 comme le montre la figure 3A.

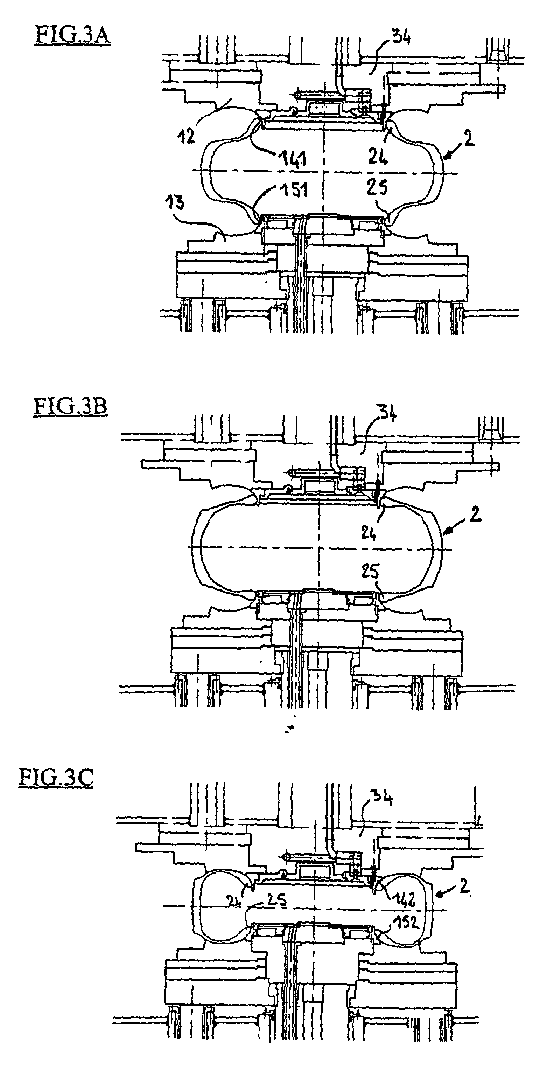

Selon la figure 3B, en poursuivant la descente du plateau supérieur 34, on rapproche les plateaux l'un de l'autre et donc les couronnes l'une de l'autre, ce qui permet de conformer ladite enveloppe réalisant ainsi une rotation des bourrelets 24 et 25 sur les surfaces 151' et 141', rotation facilitée par la présence des portées 152' et 142' dont les diamètres sont supérieurs aux diamètres intérieurs de l'enveloppe crue.

On augmente alors la pression dans l'enveloppe de pneumatique 2 de manière importante et rapide par introduction d'un fluide dans ladite enveloppe de pneumatique directement en contact avec les parois de cette dernière, et on referme simultanément le moule 1. Ainsi on force les bourrelets 24 et 25 à passer au delà des portées 152' et 142' axialement vers l'extérieur du moule 1 et à venir se plaquer contre les tronçons 152, 142. La surface extérieure de chaque bourrelet 24, 25 venant respectivement en appui sur une portée 142', 152', une rainure 142", 152" et une portion tronconique 142"', 152"'(figure 3C).

On peut alors monter en pression à l'intérieur de l'enveloppe de pneumatique afin de réaliser la vulcanisation.

Il peut être intéressant de prévoir une canne d'aspiration ou tout moyen équivalent pour éliminer les restes de fluides qui pourraient rester contre le flanc 23 inférieur dans l'enveloppe de pneumatique, agissant lors de la vulcanisation ou en fin de vulcanisation une fois que l'on a relâché la pression. Le déchargement de l'enveloppe de pneumatique ne pose pas de difficulté particulière, le faible volume de gomme correspondant aux rainures 152" et 142" constituant pour chaque bourrelet une lèvre souple qui ne s'oppose pas à l'extraction de l'enveloppe.

## Revendications

1. Moule de vulcanisation (1) d'une enveloppe de pneumatique (2) comportant deux bourrelets (24, 25), pour la vulcanisation par action directe d'un fluide sur les parois intérieures de ladite enveloppe, ledit moule comprenant deux couronnes (14, 15) de moulage respectivement de la surface extérieure de chacun des bourrelets (24, 25), chaque couronne (14, 15) de moulage comprenant successivement axialement à partir du centre du moule (1) vers l'extérieur de ce dernier, un premier tronçon annulaire (141, 151) présentant une surface extérieure (141', 151') de support, pour supporter le bourrelet (24, 25) correspondant lors de la conformation de l'enveloppe de pneumatique (2) crue, et un deuxième tronçon annulaire (142, 152), axialement adjacent à ladite surface de support et axialement plus à l'extérieur par rapport à celle-ci, assurant le moulage dudit bourrelet (24, 25) et assurant l'étanchéité du moule (1), **caractérisé par le fait que** le deuxième tronçon (142, 152) comporte successivement axialement à partir du centre du moule vers l'extérieur de ce dernier, une portée circonférentielle (142', 152') au contact du premier tronçon (141, 151), une rainure circonférentielle (142", 152") et une portion sensiblement tronconique (142''', 152''').

2. Moule selon la revendication 1, dans lequel la portée (142', 152') présente une surface sensiblement cylindrique dont le diamètre (Φ3) est supérieur au diamètre intérieur minimal de l'enveloppe de pneumatique (2) crue (Φ1) et à celui de l'enveloppe de pneumatique cuite (Φ2).

3. Moule selon l'une quelconque des revendications 1 ou 2, dans lequel chaque couronne (14 ,15) présente un troisième tronçon (143, 153) tronconique de précentrage de l'enveloppe de pneumatique (2) dans le moule (1), situé dans le prolongement axial du premier tronçon (141, 151) vers le centre du moule (1).

4. Moule selon la revendication 3, dans lequel le troisième tronçon (143, 153) tronconique possède une génératrice formant un angle (α) d'environ 5° avec l'axe du moule (1).

5. Moule selon l'une quelconque des revendications 1 à 4, dans lequel la surface extérieure (141', 151') du premier tronçon (141,151) est concave et possède un rayon de courbure correspondant sensiblement au rayon de courbure des bourrelets (24, 25) de l'enveloppe de pneumatique (2) crue.

6. Moule selon l'une quelconque des revendications 1 à 5, dans lequel la rainure circonférentielle (142", 152") a une hauteur h comprise entre 0,5 mm et 4 mm.

7. Moule selon l'une quelconque des revendications 1 à 6, dans lequel la surface desdites couronnes est totalement étanche à l'air.

## Patentansprüche

1. Vulkanisations-Formwerkzeug (1) eines Reifenmantels (2) mit zwei Wülsten (24, 25) für die Vulkanisation durch unmittelbare Einwirkung eines Strömungsmittels auf die Innenwände des genannten Mantels, wobei das genannte Formgebungswerkzeug zwei Formgebungskränze (14, 15) jeweils für die Außenoberfläche eines jeden der Wülste (24, 25) aufweist, und jeder Formgebungskranz (14, 15) axial aufeinanderfolgend, von der Mitte des Formwerkzeugs (1) ausgehend bezüglich dieser nach außen, ein erstes, ringförmiges Teilstück (141, 151) aufweist, das eine äußere Stützfläche (141', 151') darbietet, um den entsprechenden Wulst (24, 25) während der Verformung des rohen Reifenmantels (2) zu stützen, sowie ein zweites, ringförmiges Teilstück (142, 152) axial neben der genannten Stützfläche und bezüglich deren axial weiter außen, das die Formgebung des genannten Wulstes (24, 25) sicherstellt und die Abdichtung (1) des Formwerkzeugs sicherstellt, **dadurch gekennzeichnet, daß** das zweite Teilstück (142, 152), axial von der Mitte des Formwerkzeugs ausgehend zu dessen Außenseite hin, aufeinanderfolgend einen Umfangsbereich (142', 152'), der in Berührung mit dem ersten Teilstück (141, 151) steht, eine Umfangsrille (142", 152") und einen im wesentlichen kegelstumpfförmigen Abschnitt (142"', 152''') aufweist.

2. Formwerkzeug nach Anspruch 1, worin der Bereich (142', 152') eine im wesentlichen zylindrische Oberfläche aufweist, deren Durchmesser (Φ3) größer ist als der minimale Innendurchmesser (Φ1) des rohen Reifenmantels (2) und als der (Φ2) des ausgehärteten Reifenmantels.

3. Formwerkzeug nach irgendeinem der Ansprüche 1 oder 2, worin jeder Kranz (14, 15) ein drittes, kegelstumpfförmiges Teilstück (143, 153) zur Vorzentrierung des Reifenmantels (2) im Formwerkzeug (1) aufweist, das in der axialen Verlängerung des ersten Teilstücks (141, 151) zur Mitte des Formwerkzeugs (1) hin liegt.

4. Formwerkzeug nach Anspruch 3, worin das dritte, kegelstumpfförmige Teilstück (143, 153) eine Erzeugende besitzt, die einen Winkel (α) von etwa 5° zur Achse des Formwerkzeugs (1) besitzt.

5. Formwerkzeug nach irgendeinem der Ansprüche 1 bis 4, worin die Außenoberfläche (141', 151') des ersten Teilstücks (141, 151) konkav ist und einen Krümmungsradius besitzt, der im wesentlichen dem Krümmungsradius der Wülste (24, 25) des rohen Reifenmantels (2) entspricht.

6. Formwerkzeug nach irgendeinem der Ansprüche 1 bis 5, worin die Umfangsrille (142", 152") eine Höhe h hat, die zwischen 0,5mm und 4mm liegt.

7. Formwerkzeug nach irgendeinem der Ansprüche 1 bis 6, worin die Oberfläche der genannten Kränze völlig luftdicht ist.

## Claims

1. A vulcanisation mould (1) for a tyre casing (2) comprising two beads (24, 25) for vulcanisation by direct action of a fluid on the inner walls of said casing, said mould comprising two crowns (14, 15) for respectively moulding the outer surfaces of each of the beads (24, 25), each moulding crown (14, 15) successively comprising, axially from the centre of the mould (1) towards the outside thereof, a first annular section (141, 151) having an outer support surface (141', 151') for supporting the corresponding bead (24, 25) on shaping of the uncured tyre casing (2), and a second annular section (142, 152), axially adjacent to said support surface and axially farther to the outside in relation thereto, for the moulding of said bead (24, 25) and securing the tightness of the mould (1), **characterised by** the fact that the second section (142, 152) comprises, successively and axially from the centre of the mould towards the outside thereof, a circumferential bearing surface (142', 152') in contact with the first section (141, 151), a circumferential groove (142", 152") and a substantially frustoconical portion (142"', 152"').

2. A mould according to Claim 1, in which the bearing surface (142', 152') has a substantially cylindrical surface, whose diameter (φ3) is greater than the minimum internal diameter (φ1) of the uncured tyre casing (2) and than that of the cured tyre casing (φ2).

3. A mould according to any one of Claims 1 or 2, in which each crown (14, 15) has a third frustoconical section (143, 153) for pre-centring of the tyre casing (2) in the mould (1), situated in the axial extension of the first section (141, 151) toward the centre of the mould (1).

4. A mould according to Claim 3, in which the frustoconical third section (143, 153) has a generatrix forming an angle (α) of approximately 5° with the axis of the mould (1).

5. A mould according to one of Claims 1 to 4, in which the outer surface (141', 151') of the first section (141, 151) is concave and possesses a radius of curvature corresponding substantially to the radius of curvature of the beads (24, 25) of the uncured tyre casing (2).

6. A mould according to any one of Claims 1 to 5, in which the circumferential groove (142", 152") has a height h ranging between 0.5 mm and 4 mm.

7. A mould according to any one of Claims 1 to 6, in which the surface of said crowns is totally airtight.
